**Europäisches Patentamt**

**European Patent Office**

**Office européen des brevets**

(19)

(11) Veröffentlichungsnummer : **0 368 802 B1**

(12)

# EUROPÄISCHE PATENTSCHRIFT

(45) Veröffentlichungstag der Patentschrift :
**05.08.92 Patentblatt 92/32**

(51) Int. Cl.$^5$ : **G01D 5/24,** G01P 15/125

(21) Anmeldenummer : **89810815.4**

(22) Anmeldetag : **31.10.89**

(54) **Gerät für die Messung von Beschleunigungen, insbesondere von Komponenten der Gravitationskraft für die Winkelmessung.**

(30) Priorität : **07.11.88 CH 4125/88**

(43) Veröffentlichungstag der Anmeldung :
**16.05.90 Patentblatt 90/20**

(45) Bekanntmachung des Hinweises auf die
Patenterteilung :
**05.08.92 Patentblatt 92/32**

(84) Benannte Vertragsstaaten :
**CH DE FR GB IT LI**

(56) Entgegenhaltungen :
**DE-A- 2 942 372**
**DE-B- 2 523 446**

(73) Patentinhaber : **Wyler AG**
**Im Hölderli**
**CH-8405 Winterthur (CH)**

(72) Erfinder : **Stauber, Siegfried Theodor**
**Hüttenkopfstrasse 32**
**CH-8051 Zürich (CH)**

(74) Vertreter : **Quehl, Horst Max, Dipl.-Ing.**
**Patentanwalt Postfach 104 Ringstrasse 7**
**CH-8274 Tägerwilen (CH)**

EP 0 368 802 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Gerät gemäss dem Oberbegriff des Patentanspruchs 1.

Ein Gerät dieser Art ist bekannt durch die DE-C-2 523 446. Sein Messprinzip beruht auf der Messung der durch die Kapazitätsänderung der beiden Kondensatoren in den zugehörigen Stromkreisen verursachten Spannungsänderungen.

Durch die DE-A-2 942 372 ist weiterhin ein Gerät zur Messung von Verschiebungen bekannt, das zwischen zwei Elektrodenplatten ein Auslenkteil aufweist. Die somit ebenfalls gebildeten beiden Kondensatoren befinden sich jeweils im Schwingkreis eines RC-Oszillators. Die durch Auslenkung aufgrund einer Verschiebung auftretenden Frequenzänderungen werden in ein Messignal umgerechnet.

Der Erfindung liegt die Aufgabe zugrunde, ein Gerät der eingangs genannten Art zu finden, das bei kleinen Abmessungen und robuster, kompakter Bauweise, insbesondere auch bei der Uebertragung des Messsignals über grössere Abstände, eine noch höhere Messgenauigkeit bei grösserem Auflösungsvermögen der Messwertanzeige aufweist.

Die Lösung dieser Aufgabe erfolgt erfindungsgemäss aufgrund der Merkmale des kennzeichnenden Teils des Patentanspruchs 1.

Für eine rechnerische Kompensation von auf die Oszillatoren einwirkender Störeinflüsse, wie z.B. aufgrund von Temperaturänderungen, ist zusätzlich mindestens ein Referenzoszillator vorgesehen, der für eine konstante Schwingungsfrequenz ausgelegt ist.

Die Oszillatoren sind vorzugsweise so auszuwählen, dass ihre Stromaufnahme weniger als 1 mA bei einer Speisespannung von mehr als 2 V beträgt. Dadurch wird errreicht, dass durch den Betriebsstrom keine wesentlichen Temperaturveränderungen hervorgerufen werden, die die Messgenauigkeit beeinflussen könnten. Ausserdem soll ihre Frequenz vorzugsweise weniger als 50 kHz betragen und ihre Schaltzeit kürzer als 500 nS sein, so dass die Ladezeiten der Kondensatoren verhältnismässig lang sind.

Die erfindungsgemässe Anordnung der elektronischen Mittel der RC-Oszillatoren sowie des Rechners, mit Ausnahme der aktiven Kondensatoren, auf einer Seite des Gerätes an einer Leiterplatte, die der anderen der zwei Elektrodenplatten abgekehrt ist, und die elektrische Verbindung der anderen Elektrodenplatte mit den elektronischen Mitteln durch einen Draht, der kontaktlos zentral durch das Auslenkteil hindurchgeführt ist, tragen wesentlich zur kompakten Bauweise, Robustheit und erhöhten Messgenauigkeit des Gerätes bei. Dielektrische Störeinflüsse werden auf diese Weise vermieden.

Weitere, die Messgenauigkeit erhöhende, Störeinflüsse verringernde und/oder die Herstellung des Gerätes vereinfachende Ausführungsformen des erfindungsgemässen Gerätes sind Gegenstand von abhängigen Patentansprüchen sowie der folgenden Beschreibung von Ausführungsbeispielen anhand der Zeichnungen zu entnehmen.

Es zeigt:

Fig.1 ein Funktionsschema des Gerätes einschliesslich seiner elektronischen Mittel und einer Messanzeige,

Fig.2 einen Axialquerschnitt durch das Gerät,

Fig.3 eine Ansicht des Auslenkteiles des Gerätes nach Fig.2,

Fig.4 eine Ansicht eines isolierenden Distanzkörpers des Gerätes nach Fig.2 und

Fig.5 einen querschnitt eines Gehäuseblockes für zwei Geräte.

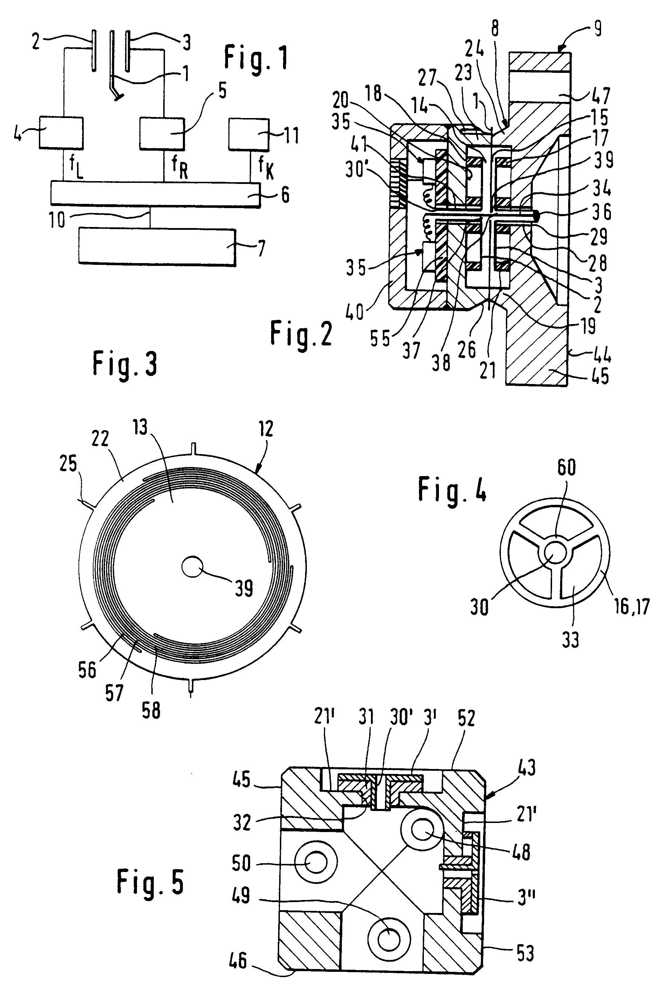

Die schematische Darstellung der Fig.1 zeigt das an Masse angeschlossene Auslenkteil 1. Es bildet durch seine Anordnung zwischen zwei Elektrodenplatten 2,3 gemeinsamen Bestandteil von zwei parallel nebeneinander angeordneten Kondensatoren. Diese Kondensatoren befinden sich im Schwingkreis von RC-Oszillatoren 4,5, so dass deren Frequenz $f_L, f_R$ durch die Grösse ihrer Kapazität bestimmt ist. Diese Grösse ändert sich infolge von Beschleunigungskräften, die eine Positionsänderung des pendelartig wirkenden Auslenkteiles 1 relativ zu den Elektrodenplatten 2,3 bewirken. Somit ist es möglich, durch eine rechnerische Auswertung der Aenderung der Frequenzen $f_L, f_R$ in einem Rechner 6 und durch geeignete Eichung den ermittelten Messwert in einem Anzeigegerät 7 digital angezeigt zu erhalten.

Entsprechend dem Anwendungszweck kann das Anzeigegerät (Display) 7 mit einem Teil des starren Gehäuse 8 des in Fig.2 beispielhaft dargestellten Gerätes 9 fest verbunden sein. Das Gerät 9 kann jedoch auch über eine Verbindungsleitung 10 mit einem entfernt, z.B. in einem zentralen Kontrollraum angeordneten Anzeigegerät 7 verbunden sein, wofür die digitale Messwertübertragung besonders vorteilhaft ist.

Die hohe Genauigkeit, die durch die digitale Auswertung der Frequenzänderungen der RC-Oszillatoren möglich ist, führt jedoch nur zu entsprechend hoher Messgenauigkeit, wenn Fehleinflüsse weitgehend vermieden werden. Den bevorzugten Ausführungsformen der Erfindung liegt deshalb die Aufgabe zugrunde, konstruktive Massnahmen zu finden, die Fehleinflüsse, insbesondere aufgrund von Temperaturänderungen und Verlustkapazitäten, möglichst vollständig beseitigen.

Die unmittelbar auf die Oszillatoren 4,5 wirkenden Veränderungen z.B. im Temperaturbereich von -60°C bis +70°C, lassen sich im Rechner 6 berücksichtigen, indem dieser zusätzlich eine von Beschleunigungskräften unabhängige Frequenz $f_K$ von mindestens einem weiteren RC-Oszillator mit sonst gleicher Spezifikation erhält. Auf diese Weise lassen sich durch allgemeine Einflüsse, z.B. Temperaturveränderungen bedingte Frequenzänderungen der RC-Oszillatoren 4,5 von den Frequenzänderungen unterscheiden, die durch die für die Messung wesentliche Positionsänderung des Auslenkteiles 1 zwischen den Elektrodenplatten 2,3 hervorgerufen worden ist.

Zur Verringerung eines Temperatureinflusses auf das Schwingverhalten der RC-Oszillatoren 4,5 steht das aus einer dünnen Metallplatte 12 mit einer Dicke von z.B. 0,08 mm hergestellte Auslenkteil 1 in direktem Kontakt mit dem ebenfalls metallischen Gehäuse 8, indem es mit diesem verlötet ist, und es hat denselben thermischen Ausdehnungskoeffizienten $£_M$ wie das Gehäuse, oder beide bestehen aus demselben Material, z.B. Messing.

Um weiterhin zu verhindern, dass sich die Breite der Spalte 14, 15 zwischen dem Auslenkteil 1 und den Elektrodenplatten 2,3 bei Temperaturänderung verändert, ist diese Spaltbreite im Verhältnis von $£_E-£M : £_M$ kleiner als die durch die isolierenden Distanzkörper 16,17 gebildete Distanz, bzw. deren Dicke, wobei $£_E$ dem thermischen Ausdehnungskoeffizienten der Distanzkörper 16,17 und $£_M$ demjenigen des Gehäuses 8 entspricht, bzw. wird ausgehend von einer vorgegebenen Breite der Spalte 14,15 die Dicke der Distanzkörper 16,17 nach diesem Verhältnis berechnet. Dabei hat das Gehäuse 8 zwei Teile 18,19 mit zueinander parallelen Innenflächen 20,21, an denen die die Elektrodenplatten 2,3 tragenden ebenen Distanzkörper angeklebt sind, und ein kreisringförmiger Aussenrand 22 des Auslenkteiles 1 ist zwischen den zueinander parallelen Stirnflächen von schalenrandförmig über die Gehäuseinnenflächen 20,21 überstehenden und gegeneinandergerichteten Gehäusebereichen 23,24 eingeschlossen.

Die feste metallische Verbindung mit den Gehäuseteilen 18, 19 erhält das Auslenkteil 1 durch radiale Fortsätze 25 seines Aussenrandes 22, indem diese in eine Umfangsrille 26 zwischen den Gehäuseteilen 18,19 hineinragen und dort durch diese Rille 26 ausfüllendes, nichtdargestelltes Lötmetall mit beiden Gehäuseteilen 18,19 verlötet sind.

Um die genau zentrische Montage des kreisrunden Auslenkteiles 1 relativ zu den kreisrunden Innenflächen der Gehäusebereiche 23, 24 zu erleichtern, sind am Umfang einer der genannten Stirnflächen der Gehäusebereiche 18,19 mindestens drei zumindest angenähert achsparallel gerichtete Bohrungen 27 vorgesehen, in die Führungsstifte gesteckt werden, so dass sie beim Auflegen des Auslenkteiles 1 auf diese Stirnfläche an dem kreisrunden Aussenrand 22 des Auslenkteiles 1 anliegen und ihn führen. Nach dem Fixieren des Auslenkteiles 1 an dem Gehäuseteil 18, z.B. durch stellenweises Anlöten, können diese nichtdargestellten Führungsstifte wieder entfernt werden.

Die aus Gründen der Messgenauigkeit ebenfalls erforderliche, genaue zentrische Anordnung der kreisrunden Elektrodenplatten 2,3 relativ zu den genannten kreisrunden Innenflächen der Gehäusebereiche 23,24 und relativ zu dem Auslenkteil kann auf verschiedene Weise erreicht werden. Beispielsweise werden die Elektrodenplatten durch diese kreisrunden Innenflächen selbst zentriert, indem sie vorerst einen an diese heranreichenden Durchmesser aufweisen und nach der Verklebung mit dem Distanzkörper 16,17 mittels eines Schneidwerkzeuges auf den erforderlichen Durchmesser bearbeitet werden.

Bei einer bevorzugten Ausführungsform haben die Elektrodenplatten einen zentrisch angeformten, beispielsweise hohlzylindrischen Fortsatz 29,30′, der in eine zentrale Oeffnung 30 des angrenzenden Distanzkörpers passt. Letzterer hat entsprechend der Darstellung in Fig.5 einen abstehenden Nabenteil 31, der in einer zentralen Bohrung 32 einer eine der Innenflächen 20,21 aufweisenden Gehäusewand zentriert ist.

Für eine verbesserte Isolierung gegenüber Fremd-oder Verlustkapazitäten schliessen die Distanzkörper 16,17 vorzugsweise grössere Hohlräume 33 ein, so dass sie die Elektrodenplatten 2,3 nur tragrippenartig an den Gehäuseinnenflächen 20,21 abstützen. Eine geeignete speichenradartige Ausführungsform ist in Fig.4 dargestellt.

Bei einer bevorzugten Ausführungsform des Gerätes, bei der die elektronischen Mittel 35 an nur einem Gehäuseteil 18 angebracht sind und die elektrische Verbindung der Elektrodenplatten 2,3 mit diesen durch einen zentralen Draht 34 erfolgt, dient die zentrale Oeffnung 30 in dem nabenartigen Zentralteil 60 des Distanzkörpers 16 oder 17 der Hindurchführung diese Drahtes sowie des zentrisch angeformten Fortsatzes 29,30′ der Elektrodenplatten 2,3.

Die zentrale elektrische Verbindung durch zentrale Oeffnungen 37,38,39 in den Elektrodenplatten 2,3 und dem Auslenkteil 1 trägt ebenfalls wesentlich zur Vermeidung der Einwirkung von Fremdkapazitäten bei, indem ein aussen an den Kondensatoren 4,5 bzw. den Elektrodenplatten 2,3 und dem Auslenkteil 1 vorbeigeführter elektrischer Verbindungsdraht eine Fremdkapazität bilden würde. Ausserdem wird durch diese zentrale elektrische Verbindung eine Ausführungsform des Gerätes wesentlich erleichtert, bei der eine in Massenkontakt mit dem metallischen Gehäuse 8 stehende metallische Haube 40 die elektronischen Mittel 35 gegen elektrische Störfelder abschirmt.

3

Die einseitige Anordnung der elektronischen Mittel 35 an einem der Gehäuseteile 18 hat auch den Vorteil, dass die gegenüberliegende Seite des Gehäuses 8 frei von solchen Mitteln bleibt und somit einen massiv angeformten Referenzblock 42, bzw. 43 aufweisen kann, an dem sich eine (Fig.2) oder mehrere (Fig.5) Referenzflächen 44;45,46 für die Winkelmessung befinden. An dem Referenzblock 42 oder 43 können auch Befestigungsmittel, z.B. Schraubenlöcher 47-50 vorgesehen sein, um das Gerät stationär an einem hinsichtlich seiner Winkelposition oder Verformung zu überwachenden Körper, wie z.B. Bauelementen von Hochhäusern, Fabrikationsanlagen, Schiffen u.s.w., zu befestigen.

Fig. 5 zeigt ein Ausführungsbeispiel eines Referenzblockes 43, der für die Winkelmessung in zwei zueinander senkrechten Ebenen zwei entsprechend zueinander angeordnete Elektrodenplatten 3′,3″ von zwei nicht vollständig dargestellten erfindungsgemässen Geräten aufweist. Wie mit Bezug auf das Ausführungsbeispiel nach Fig.2 zuvor beschrieben, wird das Auslenkteil 1 zwischen zwei Stirnflächen von Gehäusebereichen 23,24 zweier Gehäuseteile 18, 19 gehalten. Beim Ausführungsbeispiel nach Fig. 5 bilden die Aussenflächen 52,53 jeweils eine dieser Stirnflächen.

Die Messgenauigkeit wird weiterhin durch eine besonders leicht federnd auslenkbare Ausgestaltung des Auslenkteiles 1 erhöht, indem dessen kreisförmiger, den aktiven inneren Bereich 13 bildender Teil durch mindestens drei in Form einer archimedischen Spirale von mehr als 360° ihn umgebende Bänder 55-57 mit seinem zwischen den Gehäuseteilen 18,19 befestigten Aussenrand 22 verbunden ist. Die Herstellung dieser Spiralbänder erfolgt in einem Stück mit dem Auslenkteil 1, indem beispielsweise in der für die Herstellung von elektrischen Leiterbahnen üblichen Fotoätztechnik mehrere entsprechend verlaufende spiralförmige Trennlinien eingearbeitet werden.

## Patentansprüche

1. Gerät für die Messung von Beschleunigungen, insbesondere von Komponenten der Gravitationskraft für die Winkelmessung aufgrund der Auslenkung eines kreisrunden metallischen Auslenkteiles(1,13), das zur Bildung von zwei aneinandergrenzenden Kondensatoren mit Abstand zwischen zwei Elektrodenplatten (2,3) und zwischen zwei Teilen (18,19) eines die Elektrodenplatten (2,3) und das Auslenkteil (1,13) umschließenden Gehäuses (8) membranartig federelastisch gehalten ist, dadurch gekennzeichnet, dass die Kondensatoren jeweils im Schwingkreis eines RC-Oszillators (4,5) angeordnet sind und die RC-Oszillatoren (4,5) mit einem digitalen Rechner verbunden sind, der die aufgrund der Auslenkung auftretenden Frequenzänderungen in ein Messignal umrechnet, wobei die elektronischen Mittel (35) der RC-Oszillatoren (4,5) sowie des Rechners auf einer Seite des Gerätes angeordnet sind, die sich in Bezug auf eine der Elektrodenplatten (2) auf der der anderen Elektrodenplatte (3) abgekehrten Seite befindet, und wobei ein elektrischer Verbindungsdraht (34) kontaktlos durch ein zentrales Loch (39) in dem kreisförmigen Auslenkteil (1,13) und die den elektronischen Mitteln (35) benachbarte Elektrodenplatte (2) geführt ist, der die den elektronischen Mitteln (35) ferner angeordnete Elektrodenplatte (3) mit diesen elektronischen Mitteln (35) verbindet.

2. Gerät nach Anspruch 1, dadurch gekennzeichnet, dass die Elektrodenplatten (2,3) angrenzend an ihr zentrales Loch (37,38) und senkrecht zu ihnen mindestens einen elektrisch leitenden Fortsatz (29,30′) aufweisen, wobei sich dieser Fortsatz (29,30′) zusammen mit dem elektrischen Verbindungsdraht (34) durch eine Oeffnung (28,41) in dem angrenzenden Gehäuseteil (18,19) bis zu deren Aussenseite erstreckt und beide dort miteinander verlötet sind.

3. Gerät nach Anspruch 1 oder 2, dadurch gekennzeichnet, dass das gemeinsame, die Kondensatorplatten (2,3) und das Auslenkteil (1,13) umschliessende Gehäuse (8) metallisch ist, die Elektrodenplatten (2,3) durch einen isolierenden Distanzkörper (16,17) gegenüber dem metallischen Gehäuse (8) isoliert sind und bei nichtausgelenktem Auslenkteil (1, 13) jeweils der Abstand (14,15) zwischen den Elektrodenplatten (2,3) und dem Auslenkteil (1,13) auch nach Temperaturveränderung konstant ist, indem seine Grösse zu der Grösse der durch die isolierenden Distanzkörper (16,17) gebildeten Distanz das Verhältnis $£_E$-$£_M$ : $£_M$ bildet, wobei $£_E$ dem thermischen Ausdehnungskoeffizienten des isolierenden Materials des Distanzkörpers (16,17) entspricht und $£_M$ demjenigen des metallischen Gehäuses (8).

4. Gerät nach Anspruch 3, dadurch gekennzeichnet, dass die isolierenden Distanzkörper (16,17) Aussparungen (33) oder Hohlräume aufweisen.

5. Gerät nach Anspruch 4, dadurch gekennzeichnet, dass die isolierenden Distanzkörper (16,17) die Form eines Speichenrades mit mindestens drei Speichen aufweisen (Fig.4).

6. Gerät nach Anspruch 2, dadurch gekennzeichnet, dass der elektrisch leitende Fortsatz (29,30′) mindestens einer der Elektrodenplatten (2,3) rohrförmig an ihr angeformt ist, den elektrischen Verbindungsdraht (34) umschliesst und von der Nabe (60) des speichenradförmigen Distanzkörpers (16, 17) umschlossen ist, so dass er diesen zentriert.

7. Gerät nach einem der Ansprüche 1 bis 6, dadurch gekennzeichnet, dass das Auslenkteil (13) spiralförmig von mindestens drei Bändern (55-57) im Winkelbereich von mehr als 360° umschlossen ist, die es mit einem kreisringförmigen Aussenrand (22) verbinden, der zwischen den beiden Gehäuseteilen (18,19) befestigt ist, wobei das Auslenkteil (13), die Bänder (55-57) und der Aussenrand (22) aus einer gemeinsamen Metallfolie geformt sind, so dass sie sich in derselben Ebene erstrecken.

8. Gerät nach Anspruch 7, dadurch gekennzeichnet, dass der kreisförmige, den Auslenkteil (13) umschliessende Aussenrand (22) zwischen kreisförmigen, ebenen Rändern (23,24) der beiden Gehäuseteile (18,19) an diesen anliegend gehalten ist und radial von dem Aussenrad (22) abstehende Fortsätze (25) in eine zwischen den Gehäuseteilen (18,19) gebildete Umfangsrille (26) hineinragen, wobei die Gehäuseteile (18,19) aus demselben metallischen Material oder einem Material mit dem gleichen thermischen Ausdehnungskoeffizienten bestehen wie das Auslenkteil (13) und die Fortsätze (25) innerhalb dieser Umfangsrille (26) mit den Gehäuseteilen (18,19) verlötet sind.

9. Gerät nach einem der Ansprüche 1 bis 8, dadurch gekennzeichnet, dass zur rechnerischen Temperaturkompensation mindestens ein weiterer RC-Oszillator (11) vorgesehen ist, der als Referenzoszillator eine konstante Schwingungsfrequenz aufweist.

10. Gerät nach einem der Ansprüche 1 bis 9, dadurch gekennzeichnet, dass an dem die elektronischen Mittel (35) tragenden Teil (18) eines metallischen, die elektrische Erdung bildenden Gerätegehäuses (8) eine diese Mittel umschliessende metallische Haube (40) mit elektrischem Kontakt befestigt ist, wobei der andere Teil (19) des metallischen Gehäuses (8) einen Gehäuseblock (42,43) bildet, an dem Befestigungsmittel (47-50) und/oder eine Referenzfläche (44-46) für Winkelmessungen vorgesehen sind.

11. Gerät nach Anspruch 10, dadurch gekennzeichnet, dass das Gerät mit einem zweiten gleichartigen Gerät kombiniert ist, wobei eine (3) der zwei Elektrodenplatten (2,3) des einen Gerätes mit einer (3') der zwei Elektrodenplatten des anderen Gerätes im Winkel von 90° an einem gemeinsamen Gehäuseblock (43) starr befestigt ist.

## Claims

1. Instrument or measuring accelarations, particularly of gravitation components for goniometry based on the deflection of a circular, metallic deflection part (1,13) which, for forming two adjacent capacitors is held in spring-elastic, membrane-like, spaced manner between two electrode plates (2,3) and between two parts (18,19) of a casing (8) surrounding the electrode plates (2,3) and the deflection part (1,13), characterized in that the capacitors are in each case arranged in the oscillating circuit of a RC-oscillator (4,5), the RC-oscillators are connected to a digital computer, which converts the frequency changes caused by the deflection into a measuring signal, the electrical means (35) of the RC-oscillators (4,5) and of the computer are located on one side of the instrument which, with respect to one of said electrode plates (2) is positioned averted from the other electrode plate (3) and an electrical connecting wire (34) is passed in contact-free manner through a central hole (39) in the circular deflection part (1,13) and in the electrode plate (2) adjacent to the electrical means (35) connecting the electrode plate (3) more remote from the electronic means (35) to the latter.

2. Instrument according to claim 1, characterized in that the electrode plates (2,3) adjacent to their central hole (37,38) and at right angles thereto, have at least one electrically conducting extension (29,30') which, together with the electrical connecting wire (34) extends through an opening (28,41) in the adjacent casing part (18,19) up to the outside thereof, where both are soldered together.

3. Instrument according to claim 1 or 3, characterized in that the common casing (8) surrounding the electrode plates (2,3) and the deflection part (1,13) is metallic, the electrode plates (2,3) are insulated by an insulating spacer (16,17) from the metallic casing (8) and in the case of non-deflected deflecting part (1,13) the spacing (14,15) between the electrode plate (2,3) and the deflection part (1,13) is constant, even after temperature chages, in that its size forms the ratio $£_E-£_M : £_M$ to the size of the distance formed by the insulating spacers, $£_E$ corresponding to the thermal expansion coefficient of the insulating material of the spacer (16,17) and $£_M$ to that of the metallic casing (8).

4. Instrument according to claim 3, characterized in that the insulating spacers (16,17) have recesses (33) or cavities.

5. Instrument according to claim 4, characterized in that the insulating spacers (16,17) are shaped like a spoked wheel with at least three spokes (fig.4).

6. Instrument according to claim 2, characterized in that the electrically conductive extension (29,30') of at least one of the electrode plates (2,3) is shaped in tubular manner thereon, surrounds the electrical connecting wire (34) and is surrounded by the hub (60) of the spoked wheel-like spacer (16,17), so that it centres the same.

EP 0 368 802 B1

7. Instrument according to one of claims 1 to 6, characterized in that, the deflection part (13) is spirally surrounded by at least three bands (55-57) in an angular range of more than 360° and said bands connected to a circular outer rim (22), which is fixed between the two casing parts (18,19), the deflection part (13), the bands (55-57) and the outer rim (22) being shaped from a common metal foil, so that they also extend in the same plane.

8. Instrument according to claim 7, characterized in that the circular outer im (22) surrounding the deflection part (13) is held between circular, planar rims (23,24) of the two casing parts (18,19) so as to engage on the same and projections (25) projecting radially from the outer rim (22) project into a circumferential groove (26) formed between the casing parts (18,19), the latter being formed from the same matallic material or a material with the same thermal expansion coefficient as the deflection part (13) and the extensions (25) are soldered to the casing parts (18,19) within said circumferential groove.

9. Instrument according to one of claims 1 to 8, characterized in that at least one further RC-oscillator (11) is provided for computational temperature compensation and which, as a reference oscillator, has a constant oscillating frequency.

10. Instrument according to one of claims 1 to 9, characterized in that to the part (18) of a metallic instrument casing (8) forming the electrical grounding carrying the electronical means (35) is fixed with electrical contact a metallic cover (40) surrounding said means, the other part (19) of the metallic casing (8) forming a casing block (42, 43), on which are provided fastening means (47-50) and/or a reference surface (44-46) for angular measurements.

11. Instrument according to claim 10, characterized in that the instrument is connected to a second one of the same type, one (3) of the two electrode plates (2,3) of one of the instruments and one (3′) of the electrode plates of the other instrument at an angle of 90° are, rigidly fixed to a common casing block (43).

## Revendications

1. Appareil pour la mesure d'accélérations, notamment des composants de la force de gravitation pour mesurer des angles, en fonction de la déviation d'un élément de déviation métallique circulaire (1,13), élément qui en vue de la formation de deux condensateurs contigus est maintenu à la manière d'une membrane à suspension élastique entre deux plaques d'électrode (2,3) et entre deux parties (18, 19) d'un boîtier (8) enveloppant les plaques d'électrode (2,3) et l'élément de déviation (1,13), caractérisé en ce que les condensateurs sont chacun disposés dans le circuit oscillant d'un oscillateur RC (4,5) et en ce que les oscillateurs RC sont connectés à une calculatrice digitale, qui convertit les variations de fréquence résultant de la déviation en un signal de mesure, les moyens électroniques (35) des oscillateurs RC (4,5) ainsi que de la calculatrice étant disposés sur le côté de l'appareil lequel, par rapport à l'une des plaques d'électrode (2) est sur la face qui n'est pas orientée vers l'autre plaque d'électrode (3), un fil électrique de connexion (34) étant guidé sans contact à travers un trou central (39) dans l'élément de déviation circulaire (1,13) et dans la plaque d'électrode (2) voisine des moyens électroniques, fil de connexion qui connecte à ces moyens électroniques la plaque d'électrode (3) qui est éloignée des moyens électroniques (35).

2. Appareil suivant la revendication 1, caractérisé en ce que les plaques d'électrode (2,3) présentent, à la limite de leur trou central (37, 38) au moins un prolongement conducteur electrique (29, 30′) perpendiculaire aux plaques d'électrode, ce prolongement (29, 30′) s'étendant, conjointement avec le fil de connexion électrique (34) à travers une ouverture (28, 41) dans la partie de boîtier limitrophe (10, 19) jusqu'à leur face extérieure, le fil et le prolongemùent y étant soudés l'un à l'autre.

3. Appareil suivant l'une ou l'autre des revendications 1 et 2, caractérisé en ce que le boîtier (8) commun enveloppant les plaques de condensateur (2,3) et l'élément de déviation (1, 13) est en métal, en ce que les plaques d'électrode (2,3) sont isolées à l'égard du boîtier métallique (8) au moyen d'un élément d'écartement isolant (16, 17) et en ce que dans la position non déviée de l'élément de déviation (1, 13) la distance (14, 15) entre les plaques d'électrode (2,3) et l'élément de déviation (1, 13) est constant même après une variation de la température, par le fait que sa valeur est à la valeur de la distance formée par les éléments d'écartement isolants (16, 17) dans le rapport $£_E-£_M : £_M$, où $£_R$ correpond au coefficient de dilatation thermique du matériau isolant de l'élément d'écartement (16, 17) et $£_M$ à celui du boîtier métallique (8).

4. Appareil suivant la revendication 3, caractérisé en ce que les éléments d'écartement isolants (16, 17) présentent des évidements (33) ou des cavités.

5. Appareil suivant la revendication 4, caractérisé en ce que les éléments d'écartement isolants (16, 17) présentent la forme df'une roue à rayons avec au moins trois rayons (Fig. 4).

6. Appareil suivant la revendication 2, caractérisé en ce que le prolongement conducteur électrique (29, 30′) est formé en forme tubulaire sur au moins une des plaques d'électrode (2,3), entoure le fil électrique de connexion (34) et est entouré par le moyeu (60) de l'élément d'écartement (16, 17) en forme de roue à rayons, de telle sorte qu'il centre cet élément d'écartement.

7. Appareil suivant l'une quelconque des revendications de 1 à 6, caractérisé en ce que l'élément de déviation (13) est enveloppé en spirale par au moins trois rubans (55-57) sur une distance angulaire de plus de 360°, rubans qui relient l'élément de déviation (13) à un bord extérieur (22) en forme d'anneau circulaire, bord extérieur qui est fixé entre les deux parties de boîtier (18, 19); l'élément de déviation (13), les rubans (55-57) et le bord extérieur (22) étant formés à partir d'une feuille métallique commune, de telle sorte qu'ils sont situés dans le même plan.

8. Appareil suivant la revendication 7, caractérisé en ce que le bord extérieur circulaire (22) entourant. l'élément de déviation (13) est maintenu entre des bords circulaires plans (23,24) des deux parties de boîtier (18, 19) et est appliqué sur ces derniers et en ce que des protubérances (25) issues radialement du bord extérieur (22) pénètrent dans une rainure périphérique (26) formée entre les parties de boîtier (18, 19), les parties de boîtier (18, 19) étant réalisées dans le même matériau métallique que l'élément de déviation (13) ou ayant le même coefficient de dilatation que ce dernier, les protubérances (25) étant, à l'intérieur de rainure périphérique (26), soudées ou brasées aux parties de boîtier (18, 19).

9. Appareil suivant l'une quelconque des revendications de 1 à 8, caractérisé en ce que peur la compensation par le calcul de la température , il est prévu au moins un oscillateur RC (11) supplémentaire, lequel en tant qu'oscillateur de référence présente une fréquence d'oscillation constante.

10. Appareil suivant l'une quelconque des revendications de 1 à 9, caractérisé en ce qu'à la partie (18) d'un boîtier métallique (8) constituant la mise électrique à la terre, partie (18) portant les moyens électroniques (35), est attaché un capot métallique (40) à contact électrique, capot renfermant ces moyens électroniques (35), l'autre partie (19) du boîtier métallique (8) constituant un bloc de boîtier (42, 43), sur lequel sont prévus des moyens de fixation (47-50) et/ou une surface de référence (44-46) pour les mesures d'angle.

11. Appareil suivant la revendication 10, caractérisé en ce que l'appareil est combiné avec un deuxième appareil similaire, l'une (3) des deux plaques d'électrode (2,3) d'un appareil étant avec l'une (3') des deux plaquesd'électrode de l'autre appareil fixée rigidement à un angle de 90° sur un bloc de boîtier commun (43).

Fig. 1

Fig. 2

Fig. 3

Fig. 4

Fig. 5